# EUROPÄISCHE PATENTSCHRIFT

(11) **EP 3 329 746 B1**
(45) Veröffentlichungstag und Bekanntmachung des Hinweises auf die Patenterteilung: **25.12.2019**
(21) Anmeldenummer: 16760378.6
(22) Anmeldetag: 07.07.2016
(51) Int. Cl.: H05B 37/02

(54) **SYSTEM ZUR KONFIGURATION VON GEBÄUDETECHNIKBETRIEBSGERÄTEN**
SYSTEM FOR CONFIGURING BUILDING TECHNOLOGY OPERATING DEVICES
SYSTÈME DE CONFIGURATION D'ÉQUIPEMENTS DE DOMOTIQUE

(30) Priorität: 27.07.2015 DE 102015214155
(43) Veröffentlichungstag der Anmeldung: 06.06.2018
(73) Patentinhaber: Tridonic GmbH & Co. KG, 6851 Dornbirn (AT)
(72) Erfinder: BECKER, Markus, 88131 Lindau (DE)
(74) Vertreter: Rupp, Christian
(86) Internationale Anmeldenummer: PCT/AT2016/060005
(87) Internationale Veröffentlichungsnummer: WO 2017/015683

(56) Entgegenhaltungen:
- US-A1- 2010 262 297
- US-A1- 2014 292 206
- US-A1- 2015 161 137

## Beschreibung

Die Erfindung bezieht sich auf ein System und ein Verfahren zur Konfiguration von Gebäudetechnikbetriebsgeräten, insbesondere von Betriebsgeräten für Leuchtmittel sowie auf ein Gebäudetechnikbetriebsgerät.

Die Veröffentlichung US20150161137A1 offenbart ein System bzw. Verfahren des Stands der Technik.

Dabei bezieht sich die Erfindung insbesondere auf Gebäudetechnikbetriebsgeräte, die drahtlos oder drahtgebunden in einem Netzwerk kommunizieren können und zur Kommunikation vorzugsweise ein Netzwerkprotokoll wie das Internet-Protokoll (IP) verwenden. Hier kann das Internet-Protokoll Version 4 (IPv4) oder das Internet-Protokoll Version 6 (IPv6) eingesetzt werden. Es ist jedoch zu verstehen, dass auch ein anderes NetzwerkProtokoll (beispielsweise IPX, BACnet, ...) bzw. Transportprotokoll oder ein auf dem Internet-Protokoll aufbauendes Protokoll (TCP, UDP oder Overlay-Protokolle, z.B. DHT-basierte) zum Einsatz kommen kann. Wichtig ist indessen, dass ein Gebäudetechnikbetriebsgerät eine Netzwerkkennung mittels des verwendeten Protokolls überträgt. Dies kann in einem Kommunikationspaket, z.B. im IP-Header erfolgen, als "Source Address", die die Quelladresse des IP-Pakets angibt. Die Netzwerkkennung kann jedoch auch als sogenannter Payload oder als/in Nutzdaten (z.B. bei Nutzung von TCP) enthalten bzw. angegeben werden.

Ziel ist es, ein Gebäudetechnikbetriebsgerät so zu konfigurieren, dass sein Betriebsparameterprofil abhängig von geographischer Position, einer Region oder einem Ort, eingestellt werden kann, in/an dem das Gebäudetechnikbetriebsgerät betrieben wird.

Die Erfindung stellt dafür ein System, ein Verfahren und ein Betriebsgerät gemäß den unabhängigen Ansprüche bereit. Weiterbildungen der Erfindung sind Gegenstand der abhängigen Ansprüche.

In einem ersten Aspekt wird ein System zur Konfiguration von Gebäudetechnikbetriebsgeräten, insbesondere von Betriebsgeräten für Leuchtmittel, bereitgestellt, aufweisend eine zentrale Kommunikationseinheit, die funktional mit einer Datenspeichereinheit verbunden ist, und dazu eingerichtet ist, Informationen aus der Datenspeichereinheit abzurufen und optional auch Informationen dort zu speichern, und wenigstens ein Betriebsgerät, das über ein Netzwerk mit der zentralen Kommunikationseinheit verbunden ist. Das Betriebsgerät ist dazu eingerichtet, eine Netzwerkkennung an die zentrale Kommunikationseinheit zu übermitteln, wobei die zentrale Kommunikationseinheit dazu eingerichtet ist, auf Basis der übermittelten Netzwerkkennung eine ortsbezogene Information mittels der Datenspeichereinheit zu ermitteln und die ermittelte ortsbezogene Information in Assoziation mit der Netzwerkkennung zu speichern und/oder die ermittelte ortsbezogene Information an das wenigstens eine Betriebsgerät zu übermitteln.

Die Netzwerkkennung kann eine Netzwerkadresse, insbesondere eine IP-Adresse sein.

Die wenigstens eine Datenspeichereinheit weist eine Geo-IP-Datenbank auf. Die wenigstens eine Datenspeichereinheit ist mit einer Informationsquelle (GIP), insbesondere einer Geo-IP-Datenbank, verbunden.

Die Datenspeichereinheit speichert Betriebsparameter für Betriebsgeräte. Die Datenspeichereinheit stellt mit der ortsbezogenen Information Betriebsparameter für Betriebsgeräte bezüglich der Netzwerkkennung bereit.

Die ortsbezogene Information kann Betriebsparameter für das wenigstens eine Betriebsgerät aufweisen.

Die zentrale Kommunikationseinheit kann an das wenigstens eine Betriebsgerät basierend auf der Netzwerkkennung Betriebsparameter als ortsbezogene Information übermitteln.

Das wenigstens eine Betriebsgerät kann auf Basis der von der zentralen Kommunikationseinheit empfangenen ortsbezogenen Information seine Betriebsparameter verändern und/oder einstellen.

Das wenigstens eine Betriebsgerät kann eine Steuereinheit aufweisen, die die von der zentralen Kommunikationseinheit übermittelte ortsbezogene Information erfasst und/oder auswertet. Auf Basis der ortsbezogenen Information kann die Steuereinheit die Betriebsparameter des wenigstens einen Betriebsgeräts verändern und/oder einstellen.

In einem weiteren Aspekt wird ein Verfahren zur Konfiguration von Gebäudetechnikbetriebsgeräten, insbesondere von Betriebsgeräten für Leuchtmittel, bereitgestellt, wobei eine zentrale Kommunikationseinheit, die funktional mit einer Datenspeichereinheit verbunden ist, Informationen aus der Datenspeichereinheit zumindest abruft und optional speichert, wenn wenigstens ein Betriebsgerät, das über ein Netzwerk mit der zentralen Kommunikationseinheit verbunden ist, eine Netzwerkkennung an die zentrale Kommunikationseinheit übermittelt. Die zentrale Kommunikationseinheit ermittelt auf Basis der Netzwerkkennung eine ortsbezogene Information mittels der Datenspeichereinheit und speichert die ermittelte ortsbezogene Information in Assoziation mit der Netzwerkkennung und/oder übermittelt die ermittelte ortsbezogene Information an das wenigstens eine Betriebsgerät.

In noch einem weiteren Aspekt wird ein Gebäudetechnikbetriebsgerät, bereitgestellt, insbesondere Betriebsgerät für Leuchtmittel, das eine Netzwerkkennung an eine mit dem Betriebsgerät über ein Netzwerk verbundene zentrale Kommunikationseinheit übermittelt, und eine ortsbezogene Information empfängt und auswertet, und basierend darauf Betriebsparameter des Betriebsgeräts verändert und/oder einstellt.

Eine Steuereinheit kann die Netzwerkkennung mittels einer Netzwerk-Kommunikationsschnittstelle des Betriebsgeräts übermitteln. Die Steuereinheit kann die über die Netzwerk-Kommunikationsschnittstelle empfangene ortsbezogene Information auswerten und basierend darauf die Betriebsparameter des Betriebsgeräts verändern und/oder einstellen.

Das Betriebsgerät kann eine Speichereinheit aufweisen, in der Betriebsparameter, insbesondere in Assoziation mit einer ortsbezogenen Information, abgelegt sind. Die Steuereinheit kann die zu einer empfangenen ortsbezogenen Information passenden Betriebsparameter aus der Speichereinheit auslesen.

Die Erfindung wird nunmehr auch mit Bezug auf die Figuren beschrieben. Es zeigt
- Fig. 1: eine schematische Darstellung des erfindungsgemäßen Systems, und
- Fig. 2: einen exemplarischen Ablauf des erfindungsgemäßen Verfahrens.

Zusammengefasst kann eine ortsabhängige Konfiguration so erfolgen: Eine Anfrage eines Gebäudetechnikbetriebsgeräts wird von dem Gebäudetechnikbetriebsgerät an eine zentrale Kommunikationseinheit gesendet. Insbesondere sendet das Gebäudetechnikbetriebsgerät eines oder mehrere TCP/IP-Pakete an die zentrale Kommunikationseinheit, die die Netzwerkkennung des Gebäudetechnikbetriebsgeräts und insbesondere seine Netzwerkadresse, eine Seriennummer und/oder eine MAC-Adresse enthalten (z.B. seine IP-Adresse als "Source Address").

Mit dieser Anfrage können beispielsweise auch Zustandsparameter des Gebäudetechnikbetriebsgeräts an die zentrale Kommunikationseinheit übermittelt werden. Bei den Zustandsparametern kann es sich z.B. um ein Datum der Inbetriebnahme, einen Betriebszeitdauerwert und/oder eine Information zu Fehlerzuständen handeln. Zudem ist es möglich, dass Informationen bzgl. einer geographischen Position oder Geoposition an die zentrale Kommunikationseinheit übermittelt werden. Es ist jedoch vorzugsweise vorgesehen, dass die zentrale Kommunikationseinheit durch Zugriff auf die Datenspeichereinheit DSE basierend auf der in der Anfrage des Gebäudetechnikbetriebsgeräts enthaltene Netzwerkkennung die geographische Position bzw. Region ermittelt, in der sich das Gebäudetechnikbetriebsgerät befindet.

Nutzt das Gebäudetechnikbetriebsgerät ein IP-basiertes Netzwerk, wie das Internet, wird eine Verbindung über einen Provider z.B. zu der zentralen Kommunikationseinheit geschaffen. Während des Verbindungsvorganges bekommt das Gebäudetechnikbetriebsgerät eine Nummer zugewiesen, die als IP-Adresse bezeichnet wird. Unter dieser Nummer tritt das Gebäudetechnikbetriebsgerät im Netz auf (wobei möglicherweise auch NAT, d.h. Network Address Translation, beim Übergang zwischen Netzsegmenten zum Einsatz kommt) und stellt unter dieser IP-Adresse Verbindungen zu den von ihm aufgerufenen Internetinhalten her. Über die IP-Adresse kann Gebäudetechnikbetriebsgerät, bzw. ein mit einer öffentlichen Internetadresse ausgestattete Gerät, über das das Gebäudetechnikbetriebsgerät auf das Gebäudetechnikgerät zugreift (wegen des Einsatzes von dynamischer IP-Adress-Vergabe, Proxyservern oder NAT), identifiziert werden.

Die Besonderheit der IP-Adressen ist, dass die IP-Adressen so zwar nicht immer eindeutig einem Gebäudetechnikbetriebsgerät zugewiesen werden können, jedoch immer einem Besitzer. Hierbei handelt es sich häufig um Internetprovider, Universitäten und ähnliche Einrichtungen, die nicht nur eine IP-Adresse, sondern gleich ganze IP-Adressräume verwalten. Der Besitzer einer IP kann frei entscheiden, welchem Netzknoten er welche Adresse zuteilt. Obwohl die Zuteilung im Prinzip schnell geändert werden kann, ist es meist so, dass von dieser Möglichkeit nur selten Gebrauch gemacht wird, nicht zuletzt, da der hierbei entstehende Verwaltungsaufwand nicht zu unterschätzen ist.

Ist also einmal die Geoposition einer IP-Adresse bekannt, kann man davon ausgehen, dass diese auch später noch aktuell ist. Da regionale Einwahlknoten häufig einen eigenen festen IP-Adresspool besitzen, funktioniert das Verfahren meist auch bei dynamischer IP-Vergabe. Beim Einsatz von Proxyservern kann maximal der Standort eben jenes Servers ermittelt werden.

Damit die zentrale Kommunikationseinheit feststellen kann, zu welcher Geoposition, also zu welchem Ort oder welcher Region, die Netzwerkkennung gehört, greift sie auf eine funktional mit ihr verbundene Datenspeichereinheit zu, die insbesondere eine sogenannte Geo-IP-Datenbank aufweist und/oder darauf zugreift. Mit Hilfe der Datenspeichereinheit, in der Netzwerkkennungen in Assoziation mit Ortsinformationen gespeichert sein können, ermittelt die zentrale Kommunikationseinheit dann eine ortsbezogene Information mit Bezug auf die Netzwerkkennung, also eine Geoposition zu der Netzwerkkennung.

Diese ortsbezogene Information, die auch der jeweiligen geographischen Region bzw. Position zugeordnete Betriebsparameter enthalten kann, kann dann von der zentralen Kommunikationseinheit in Assoziation mit der Netzwerkkennung des Gebäudetechnikbetriebsgeräts gespeichert werden, z.B. in der Datenspeichereinheit. Alternativ oder zusätzlich kann die ortsbezogene Information an das Gebäudetechnikbetriebsgerät von der zentralen Kommunikationseinheit übermittelt werden. So kann die zentrale Kommunikationseinheit durch Zugriff auf die Datenspeichereinheit z.B. das Land, die Stadt und/oder einen Landesteil ermitteln, aus dem die Netzwerkkennung stammt. Insbesondere ist die Datenspeichereinheit eine Geo-IP-Datenbank.

Das Gebäudetechnikbetriebsgerät weist insbesondere eine Steuereinheit auf, die die von der zentralen Kommunikationseinheit empfangenen Daten auswerten und/oder dekodieren kann. So kann die Steuereinheit aus den empfangenen Daten die ortsbezogene Information ermitteln. Korrespondierend kann die ortsbezogene Information durch die zentrale Kommunikationseinheit kodiert übertragen werden, insbesondere verschlüsselt. Weist die ortsbezogene Information Betriebsparameter bzw. Informationen zu Betriebsparametern auf, so setzt die Steuereinheit die Betriebsparameter des Gebäudetechnikbetriebsgeräts oder verändert die Betriebsparameter des Gebäudetechnikbetriebsgeräts entsprechend.

Hierbei ist zu verstehen, dass die von der zentralen Kommunikationseinheit übermittelten Betriebsparameter regionale Sicherheitsvorschriften betreffen können und die Einstellung der Betriebsparameter durch die Steuereinheit erfolgt, um lokale Vorschriften einzuhalten. Insbesondere kann so beispielsweise eine maximal zulässige Betriebstemperatur, eine maximal zulässige Ansteuerspannung bzw. ein maximal zulässiger Ansteuerstrom für einen durch das Gebäudetechnikbetriebsgerät betriebenen Aktor oder Sensor bzw. ein Modul, z.B. ein OLED/LED-Modul, Leuchtmittel, Motor, oder akustischer Signalgeber sein. Selbstverständlich können auch weitere Betriebsparameter wie Umdrehungsgeschwindigkeit, maximale Betriebszeiten, Betriebsparameter-Bereichsgrenzen, Farbtemperatureinstellungen und ähnliches festgelegt werden. Somit können insbesondere Grenzwerte für an dem Gebäudetechnikbetriebsgerät einstellbare Betriebsparameter durch die ortsbezogene Information übertragen werden. Die Betriebsparameter können in einer Speichereinheit des Gebäudetechnikbetriebsgeräts gespeichert werden.

Weiter ist es alternativ oder zusätzlich möglich, dass die ortsbezogene Information, die von dem Betriebsgerät empfangen wird, lediglich eine Information über die Geoposition, z.B. den Ort bzw. die Region, enthält, die durch die Netzwerkkennung vorgegeben wurde. Das Gebäudetechnikbetriebsgerät kann eine Speichereinheit aufweisen, in der Betriebsparameter hinterlegt sind in Assoziation mit der Geoposition. Anhand der empfangenen ortsbezogenen Informationen kann dann aus der Speichereinheit der entsprechende Betriebsparameter oder Betriebsparametersatz abgerufen werden und die Einstellung der Betriebsparameter bzw. Betriebsparametergrenzen des Gebäudetechnikbetriebsgeräts kann wie vorstehend beschrieben durch die Steuereinheit erfolgen. Insbesondere enthält die ortsbezogene Information eine Geoposition und die zu der Geoposition passenden Betriebsparameter werden aus der Speichereinheit abgerufen.

Beispiele für Datenbanken, die Teil der Datenspeichereinheit sein können, oder auf die die Datenspeichereinheit zugreifen kann bzw. für die Datenspeichereinheit, und die eine Assoziation von Netzwerkkennungen zu Ortsinformationen speichern, sind unter http://freegeoip.net/, http://dev.maxmind.com/geoip/, oder http://ipinfodb.com/ip_location_api.php zu finden.

Mit Hilfe der ortsbasierten Information können somit unabhängig vom Vertriebskanal eines Gebäudetechnikbetriebsgeräts für die entsprechenden Regionen bzw. Orte passende Betriebsparameterkonfigurationen an Gebäudetechnikbetriebsgeräte übermittelt und eingestellt, aber auch Informationen über den Zustand und Einsatzort der Gebäudetechnikbetriebsgeräte erfasst werden.

Alternativ oder zusätzlich kann das Gebäudetechnikbetriebsgerät auch eine Seriennummer oder eine ähnliche Kennung an die zentrale Kommunikationseinheit als Netzwerkkennung übermitteln.

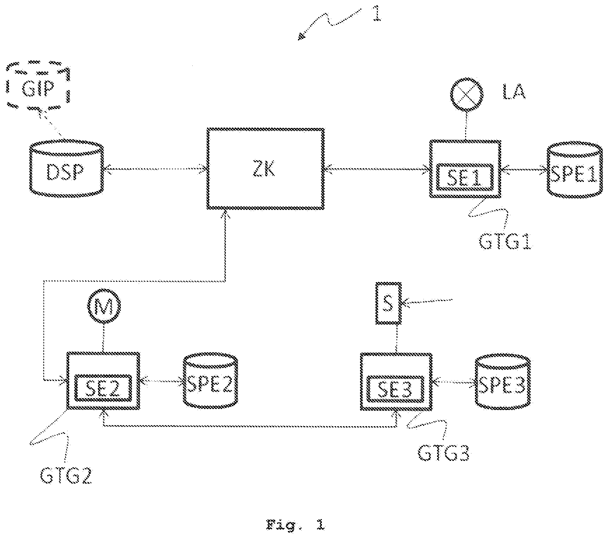

Ein entsprechendes System 1 ist in Figur 1 gezeigt. Eine zentrale Kommunikationseinheit ZK ist hier mit wenigstens einem Gebäudetechnikbetriebsgerät GTG1 verbunden. Die zentrale Kommunikationseinheit ZK ist zudem mit einer Datenspeichereinheit DSE funktional verbunden, die zu einer Netzwerkkennung ortsbezogene Informationen bereitstellt. Dazu greift die Datenspeichereinheit DSE optional auf eine weitere Informationsquelle GIP zu, die insbesondere eine GEO-IP-Datenbank ist. So kann die Datenspeichereinheit DSE eine ortsbezogene Information zu der Netzwerkkennung des wenigstens einen Gebäudetechnikbetriebsgeräts GTG1 bereitstellen, indem z.B. durch die Datenspeichereinheit DSE eine Abfrage mit der Netzwerkkennung an der Informationsquelle GIP erfolgt. Alternativ kann auch eine Zuordnung einer Netzwerkkennung zu einem Ort oder einer Region durch die Datenspeichereinheit DSE selbst erfolgen.

Die Datenspeichereinheit DSE kann zudem Betriebsparameter und/oder Informationen zu Betriebsparametern speichern, die abhängig von der der Netzwerkkennung zugeordneten Geoposition sind. Diese Betriebsparameter bzw. die Informationen zu Betriebsparametern können mit der durch die Datenspeichereinheit DSE bereitgestellte ortsbezogenen Information an das wenigstens eine Gebäudetechnikbetriebsgerät GTG1 übermittelt werden, wobei dann auf Seiten des wenigstens einen Gebäudetechnikbetriebsgeräts GTG1 eine entsprechende Veränderung der Betriebsparameter erfolgt. In der Datenspeichereinheit DSE könne zudem die ortsbezogenen Informationen in Assoziation mit der jeweilig zugehörigen Netzwerkkennung gespeichert werden. Insbesondere ist die Datenspeichereinheit DSE eine Datenbank, die auf der zentralen Kommunikationseinheit ZK, z.B. einem Server, ausführbar ist. Die Datenspeichereinheit DSE kann auch über eine Netzwerkverbindung mit der zentralen Kommunikationseinheit ZK verbunden sein.

Exemplarisch ist in Fig. 1 das Gebäudetechnikbetriebsgerät GTG1 gezeigt, das eine Steuereinheit SE1 aufweist. Das Gebäudetechnikbetriebsgerät GTG1 ist zudem mit einer Speichereinheit SPE1 verbunden, bzw. ist die Speichereinheit SPE1 Teil des Gebäudetechnikbetriebsgeräts GTG1. Mittels einer Netzwerk-Kommunikationsschnittstelle (nicht gezeigt) ist das Gebäudetechnikbetriebsgerät GTG1 und/oder die Steuereinheit SE1 über ein Netzwerk (angedeutet durch Pfeile) mit der zentralen Kommunikationseinheit ZK verbunden. Die zentrale Kommunikationseinheit ZK weist zumindest eine passende Netzwerk-Kommunikationsschnittstelle (nicht gezeigt) auf.

Die Steuereinheit SE1 ist dabei, wie gesagt, vorgesehen, um eine Geoposition und/oder Betriebsparameter aus den ortsbezogenen Informationen zu ermitteln. In der Speichereinheit SPE1 können Betriebsparameter gespeichert werden, die insbesondere durch die von der Steuereinheit SE1 ermittelten Betriebsparameter oder ergänzt werden können. Zudem können in der Speichereinheit SPE1 Zustandsparameter gespeichert sein, die durch das Gebäudetechnikbetriebsgerät GTG1 an die zentrale Kommunikationseinheit ZK übermittelt werden können.

Exemplarisch ist das Gebäudetechnikbetriebsgerät GTG1 in Fig. 1 als Betriebsgerät für ein Leuchtmittel LA dargestellt. Das Leuchtmittel LA kann durch das Gebäudetechnikbetriebsgerät GTG1 entsprechend den Betriebsparametern betrieben werden, die in der Speichereinheit SPE1 gespeichert sind und/oder die aus der ortsbezogenen Information durch die Steuereinheit SE1 ermittelt werden, z.B. durch eine Abfrage mit der ortsbezogenen Information an der Speichereinheit SPE1.

So kann die ortsbezogene Information einen Ländercode nach ISO 3166-1 oder ISO 3166-2 enthalten, der von der Steuereinheit SE1 ausgewertet wird, z.B. den Wert "AT" für Österreich oder "DE-BY" für das Gebiet "Bayern" in Deutschland ("DE"). Für diesen Wert kann dann in der Speichereinheit SPE1 z.B. mittels einer Nachschlagtabelle ("look-up-table", LUT) zu dem Wert ein Betriebsparameter oder Betriebsparametersatz für das Gebäudetechnikbetriebsgerät GTG1 ermittelt werden. Selbstverständlich ist es auch möglich, dass die ortsbezogenen Informationen detaillierter sind und z.B. auch Ortsnamen enthalten.

Fig. 1 zeigt weiter ein zweites Gebäudetechnikbetriebsgerät GTG2 mit einer Steuereinheit SE2 und einer Speichereinheit SPE2, das dazu eingerichtet ist, einen Aktor M, z.B. einen Motor zu betreiben. Auch die Steuereinheit SE2 kann eine entsprechende ortsbezogene Informationen zu der Netzwerkkennung des zweiten Gebäudetechnikbetriebsgeräts GTG2 auswerten und Ortsinformationen ermitteln, analog zum Gebäudetechnikbetriebsgerät GTG1.

Exemplarisch ist ein drittes Gebäudetechnikbetriebsgerät GTG3 gezeigt, das mit einer Steuereinheit SE3 ausgestattet ist und exemplarisch zum Betrieb eines Sensors S, beispielsweise eines Tageslicht-, Temperatur-, Druck- und/oder Tastsensors, vorgesehen ist. Das dritte Gebäudetechnikbetriebsgerät GTG3 ist dabei über das zweite Gebäudetechnikbetriebsgerät GTG2 mit der zentralen Kommunikationseinheit ZK verbunden. Dies soll veranschaulichen, dass keine direkte Verbindung zwischen einem Gebäudetechnikbetriebsgerät und der zentralen Kommunikationseinheit ZK bestehen muss, sondern dass lediglich eine Netzwerkverbindung, auch indirekt, zwischen dem Gebäudetechnikbetriebsgerät und der zentralen Kommunikationseinheit ZK vorgesehen sein kann.

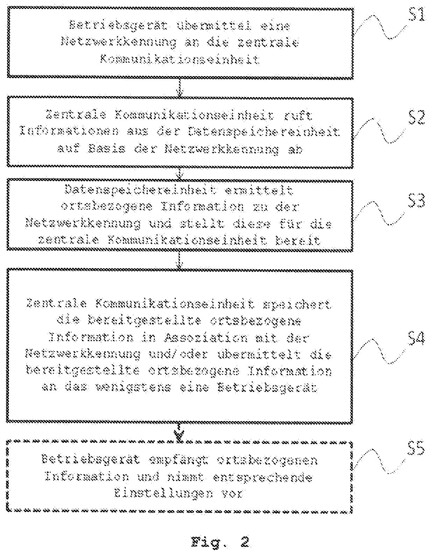

Fig. 2 veranschaulicht nun das Verfahren gemäß der Erfindung z.B. für das erste Gebäudetechnikbetriebsgerät GTG1.

In einem ersten Schritt S1 übermittelt ein Gebäudetechnikbetriebsgerät GTG1 eine Netzwerkkennung an die zentrale Kommunikationseinheit ZK. Daraufhin ruft die zentrale Kommunikationseinheit ZK Informationen aus der Datenspeichereinheit DSE auf Basis der Netzwerkkennung in einem Schritt S2 ab. In einem Schritt S3 ermittelt die Datenspeichereinheit DSE eine ortsbezogene Information zu der Netzwerkkennung und stellt diese für die zentrale Kommunikationseinheit ZK bereit. Zur Ermittlung der ortsbezogenen Information kann die Datenspeichereinheit DSE selbst, z.B. mittels einer Nachschlagetabelle ("look-up-table", LUT) eine Ortsinformation zu der Netzwerkkennung, z.B. "AT" oder "Austria" für Österreich zu der IP-Adresse 80.120.125.169 bestimmen. Die Datenspeichereinheit DSE kann jedoch z.B. auch auf die Informationsquelle GIP zugreifen, um entsprechende Informationen abzurufen.

Die zentrale Kommunikationseinheit ZK speichert in Schritt S4 die bereitgestellte ortsbezogene Information in Assoziation mit der Netzwerkkennung und/oder übermittelt die bereitgestellte ortsbezogene Information an das wenigstens eine Gebäudetechnikbetriebsgerät GTG1. Die ortsbezogene Information kann auch Informationen wie Postleitzahl, Längengrad, Breitengrad und/oder Zeitzone umfassen. In Schritt S5, der für den Fall vorgesehen ist, dass die zentrale Kommunikationseinheit ZK die ortsbezogene Information an das wenigstens eine Gebäudetechnikbetriebsgerät GTG1 übermittelt, empfängt das Gebäudetechnikbetriebsgerät GTG1 die ortsbezogene Information und nimmt entsprechende Einstellungen vor, z.B. durch Veränderung der entsprechenden Betriebsparameter, z.B. Einstellung der Zeitzone. Analoges gilt für das zweite Gebäudetechnikbetriebsgerät GTG2 und das dritte Gebäudetechnikbetriebsgerät GTG3.

Es ist zu verstehen, dass das Gebäudetechnikbetriebsgerät GTG1 insbesondere ein Betriebsgerät für LEDs bzw. OLEDs sein kann. Zudem ist zu verstehen, dass die zentrale Kommunikationseinheit ZK die Netzwerkkennung der Gebäudetechnikbetriebsgeräte speichern kann zusammen mit einer ortsbezogenen Information, die zumindest einen Ort wiedergibt, der durch Anfrage an die zentrale Kommunikationseinheit ZK auf Basis der Netzwerkkennung ermittelt wird. Diese Speicherung kann auch zusammen mit dem Zustandsparameter des Gebäudetechnikbetriebsgeräts GTG1 bis GTG3 erfolgen.

Zudem ist es exemplarisch auch möglich, dass die zentrale Kommunikationseinheit ZK eine Firmware für die Gebäudetechnikbetriebsgeräte bereitstellt. Die Steuereinheit SE1 - SE3 der Gebäudetechnikbetriebsgeräte GTG1 - GTG3 kann dann jeweils, in festgelegten zeitlichen Abständen, prüfen, ob eine neue Version der Firmware für das Gebäudetechnikbetriebsgerät durch die zentrale Kommunikationseinheit ZK verfügbar ist. Dazu kann das Gebäudetechnikbetriebsgerät eine Anfrage an die zentrale Kommunikationseinheit ZK senden, die neben der Netzwerkkennung zum Beispiel auch eine Seriennummer und/oder auch Zustandsparameter des Betriebsgeräts übermittelt. Die ortsbezogenen Informationen können dann auch zusammen mit einer neuen Firmware-Version an das Gebäudetechnikbetriebsgerät GTG1 - GTG3 übermittelt werden.

## Patentansprüche

1. System (1) zur Konfiguration von Gebäudetechnikbetriebsgeräten (GTG1, GTG2, GTG3), insbesondere von Betriebsgeräten für Leuchtmittel, aufweisend
- eine zentrale Kommunikationseinheit (ZK), die funktional mit einer Datenspeichereinheit (DSE) verbunden ist, und dazu eingerichtet ist, Informationen aus der Datenspeichereinheit (DSE) abzurufen und optional auch Informationen dort zu speichern, und
- wenigstens ein Betriebsgerät (GTG1), das über ein Netzwerk mit der zentralen Kommunikationseinheit (ZK) verbunden ist, **dadurch gekennzeichnet, dass** das wenigstens eine Betriebsgerät (GTG1) dazu eingerichtet ist, eine Netzwerkkennung an die zentrale Kommunikationseinheit (ZK) zu übermitteln, und wobei die zentrale Kommunikationseinheit (ZK) dazu eingerichtet ist, auf Basis der übermittelten Netzwerkkennung eine ortsbezogene Information mittels der Datenspeichereinheit (DSE) zu ermitteln und die ermittelte ortsbezogene Information in Assoziation mit der Netzwerkkennung zu speichern und/oder die ermittelte ortsbezogene Information an das wenigstens eine Betriebsgerät (GTG1) zu übermitteln,
wobei die Datenspeichereinheit (DSE) eine Geo-IP-Datenbank zum Ermitteln der ortsbezogenen Information aufweist, **gekennzeichnet dadurch, dass**
die Datenspeichereinheit (DSE) dazu eingerichtet ist, Betriebsparameter für das wenigstens eine Betriebsgerät (GTG1-GTG3) zu speichern, und mit der ortsbezogenen Information Betriebsparameter für das wenigstens eine Betriebsgerät (GTG1-GTG3) bezüglich der Netzwerkkennung bereitzustellen.

2. System nach Anspruch 1, wobei die Netzwerkkennung eine Netzwerkadresse, insbesondere eine IP-Adresse ist.

3. System nach einem der vorhergehenden Ansprüche, wobei
die ortsbezogene Information die Betriebsparameter für das wenigstens eine Betriebsgerät (GTG1) aufweist.

4. System nach einem der vorhergehenden Ansprüche, wobei
die zentrale Kommunikationseinheit (ZK) dazu eingerichtet ist, an das wenigstens eine Betriebsgerät basierend auf der Netzwerkkennung die Betriebsparameter als ortsbezogene Information zu übermitteln.

5. System nach einem der vorhergehenden Ansprüche, wobei das wenigstens eine Betriebsgerät dazu eingerichtet ist, auf Basis der von der zentralen Kommunikationseinheit (ZK) empfangenen ortsbezogenen Information seine Betriebsparameter zu verändern und/oder einzustellen.

6. System nach einem der vorhergehenden Ansprüche, wobei das wenigstens eine Betriebsgerät (GTG1) eine Steuereinheit (SE1) aufweist, die dazu eingerichtet ist, die von der zentralen Kommunikationseinheit (ZK) übermittelte ortsbezogenen Information zu erfassen und auszuwerten und, auf Basis der ortsbezogenen Information, die Betriebsparameter des wenigstens einen Betriebsgeräts (GTG1) zu verändern und/oder einzustellen.

7. Verfahren zur Konfiguration von
Gebäudetechnikbetriebsgeräten, insbesondere von Betriebsgeräten für Leuchtmittel,
wobei eine zentrale Kommunikationseinheit, die funktional mit einer Datenspeichereinheit verbunden ist, Informationen aus der Datenspeichereinheit zumindest abruft und optional speichert (S2), wenn wenigstens ein Betriebsgerät, das über ein Netzwerk mit der zentralen Kommunikationseinheit verbunden ist, eine Netzwerkkennung an die zentrale Kommunikationseinheit übermittelt (S1),
**dadurch gekennzeichnet, dass**
die zentrale Kommunikationseinheit auf Basis der Netzwerkkennung eine ortsbezogene Information mittels der Datenspeichereinheit ermittelt (S3) und die ermittelte ortsbezogene Information in Assoziation mit der Netzwerkkennung speichert und/oder die ermittelte ortsbezogene Information an das wenigstens eine Betriebsgerät übermittelt (S4),
wobei die Datenspeichereinheit (DSE) eine Geo-IP-Datenbank zum Ermitteln der ortsbezogenen Information aufweist, und wobei die Datenspeichereinheit (DSE) Betriebsparameter für das wenigstens eine Betriebsgerät (GTG1-GTG3) speichert, und wobei die Datenspeichereinheit (DSE) mit der ortsbezogenen Information Betriebsparameter für das wenigstens eine Betriebsgerät (GTG1-GTG3) bezüglich der Netzwerkkennung bereitstellt.

## Claims

1. A system (1) for configuring building technology operating devices (GTG1, GTG2, GTG3), in particular operating devices for lighting means, having
- a central communication unit (ZK), which is functionally connected to a data storage unit (DSE), and is configured to retrieve information from the data storage unit (DSE) and optionally also to store information there, and
- at least one operating device (GTG1), which is connected to the central communication unit (ZK) via a network, **characterized in that** the at least one operating device (GTG1) is configured to transmit a network identifier to the central communication unit (ZK), and wherein the central communication unit (ZK) is configured, to determine an item of location-based information by means of the data storage unit (DSE) on the basis of the transmitted network identifier and to store the determined location-based information in association with the network identifier and/or to transmit the determined location-based information to the at least one operating device (GTG1),
wherein the data storage unit (DSE) has a Geo-IP database for determining the location-based information,
**characterized in that**
the data storage unit (DSE) is configured to store operating parameters for the at least one operating device (GTG1-GTG3), and with the location-based information to provide operating parameters for the at least one operating device (GTG1-GTG3) with respect to the network identifier.

2. The system according to Claim 1, wherein the network identifier is a network address, in particular an IP address.

3. The system according to any one of the preceding claims, wherein the location-based information has the operating parameters for the at least one operating device (GTG1).

4. The system according to any one of the preceding claims, wherein the central communication unit (ZK) is configured to transmit the operating parameters as location-based information to the at least one operating device based on the network identifier.

5. The system according to any one of the preceding claims, wherein the at least one operating device is configured to change and/or to adjust its operating parameters on the basis of the location-based information received by the central communication unit (ZK).

6. The system according to any one of the preceding claims, wherein the at least one operating device (GTG1) has a control unit (SE1), which is configured to detect and to evaluate location-based information transmitted by the central communication unit (ZK) and, on the basis of the location-based information to change and/or to adjust the operating parameters of the at least one operating device (GTG1).

7. A method for configuring building technology operating devices for lighting means,
wherein a central communication unit, which is functionally connected to a data storage unit, at least retrieves and optionally stores (S2) information from the data storage unit, if at least one operating device, which is connected to the central communication unit via a network, transmits (S1) a network identifier to the central communication unit,
**characterized in that**
the central communication unit determines (S3) an item of location-based information by means of the data storage unit on the basis of the network identifier and stores the determined location-based information in association with the network identifier and/or transmits (S4) the determined location-based information to the at least one operating device,
wherein the data storage unit (DSE) has a Geo-IP database for determining the location-based information, and wherein the data storage unit (DSE) stores operating parameters for the at least one operating device (GTG1-GTG3), and wherein the data storage unit (DSE) with the location-based information provides operating parameters for the at least one operating device (GTG1-GTG3) with respect to the network identifier.

## Revendications

1. Système (1) pour la configuration d'appareil de commande domotiques (GTG1, GTG2, GTG3), plus particulièrement d'appareils de commande pour des moyens d'éclairage, comprenant :
- une unité de communication centrale (ZK), qui est reliée de manière fonctionnelle avec une unité d'enregistrement de données (DSE) et qui est conçue pour lire des informations dans l'unité d'enregistrement de données (DSE) et, en option, d'y enregistrer des informations et
- au moins un appareil de commande (GTG1) qui est relié avec l'unité de communication centrale (ZK) par l'intermédiaire d'un réseau, **caractérisé en ce que** l'au moins un appareil de commande (GTG1) est conçu pour transmettre un identifiant réseau à l'unité de communication centrale (ZK) et l'unité de communication centrale (ZK) étant conçue pour déterminer, sur la base de l'identifiant réseau transmis, une information localisée au moyen de l'unité d'enregistrement de données (DSE) et pour enregistrer l'information localisée déterminée en association avec l'identifiant réseau et/ou pour transmettre l'information localisée déterminée à l'au moins un appareil de commande (GTG1), l'unité d'enregistrement de données (DSE) comprenant une base de données géo-IP pour la détermination de l'information localisée, **caractérisé en ce que** l'unité d'enregistrement de données (DSE) est conçue pour enregistrer des paramètres de fonctionnement pour l'au moins un appareil de commande (GTG1 - GTG3) et pour mettre à disposition, avec l'information localisée, des paramètres de fonctionnement pour l'au moins un appareil de commande (GTG1 - GTG3) selon l'identifiant réseau.

2. Système selon la revendication 1, l'identifiant réseau étant une adresse réseau, plus particulièrement une adresse IP.

3. Système selon l'une des revendications précédentes, l'information localisée comprenant les paramètres de fonctionnement pour l'au moins un appareil de commande (GTG1).

4. Système selon l'une des revendications précédentes, l'unité de communication centrale (ZK) étant conçue pour transmettre les paramètres de fonctionnement en tant qu'information localisée à l'au moins un appareil de commande sur la base de l'identifiant réseau.

5. Système selon l'une des revendications précédentes, l'au moins un appareil de commande étant conçu pour modifier et/ou régler, sur la base de l'information localisée reçu par l'unité de communication centrale (ZK), ses paramètres de fonctionnement.

6. Système selon l'une des revendications précédentes, l'au moins un appareil de commande (GTG1) comprenant une unité de commande (SE1) qui est conçue pour détecter et analyser l'information localisée transmise par l'unité de communication centrale (ZK) et pour modifier et/ou régler les paramètres de fonctionnement de l'au moins un appareil de commande (GTG1) sur la base de l'information localisée.

7. Procédé de configuration d'appareils de commande domotiques, plus particulièrement d'appareils de commande pour des moyens d'éclairage, une unité de communication centrale, qui est reliée avec une unité d'enregistrement de données, au moins lisant des informations dans l'unité d'enregistrement de données et, en option les enregistrant (S2), lorsqu'au moins un appareil de commande, qui est relié par l'intermédiaire d'un réseau, avec l'unité de communication centrale, transmet (S1) un identifiant réseau à l'unité de communication centrale, **caractérisé en ce que** l'unité de communication centrale détermine (S3), sur la base de l'identifiant réseau, une information localisée au moyen de l'unité d'enregistrement de données et enregistre l'information localisée déterminée en association avec l'identifiant réseau et/ou transmet (S4) l'information localisée déterminée à l'au moins un appareil de commande, l'unité d'enregistrement de données (DSE) comprenant une base de données géo-IP pour la détermination de l'information localisée et l'unité d'enregistrement de données (DSE) enregistrant des paramètres de fonctionnement pour l'au moins un appareil de commande (GTG1 - GTG3) et l'unité d'enregistrement de données (DSE) mettant à disposition, avec l'information localisée, des paramètres de fonctionnement pour l'au moins un appareil de commande (GTG1 - GTG3) selon l'identifiant réseau.
